(19) **Europäisches Patentamt / European Patent Office / Office européen des brevets**

(11) **EP 4 232 337 B1**

(12) **EUROPEAN PATENT SPECIFICATION**

(45) Date of publication and mention
of the grant of the patent:
**03.12.2025 Bulletin 2025/49**

(21) Application number: **21801104.7**

(22) Date of filing: **26.10.2021**

(51) International Patent Classification (IPC):
**B61B 13/10** *(2006.01)*

(52) Cooperative Patent Classification (CPC):
**B61B 13/10;** Y02T 30/00

(86) International application number:
**PCT/EP2021/079655**

(87) International publication number:
**WO 2022/090212 (05.05.2022 Gazette 2022/18)**

(54) **A TUBE TRANSPORT SYSTEM FOR VERY HIGH VEHICLE SPEEDS AND A METHOD OF OPERATING A TUBE TRANSPORT SYSTEM**

ROHRTRANSPORTSYSTEM FÜR SEHR HOHE FAHRZEUGGESCHWINDIGKEITEN UND VERFAHREN ZUM BETRIEB EINES ROHRTRANSPORTSYSTEMS

SYSTÈME DE TRANSPORT DE TUBES POUR DES VITESSES DE VÉHICULE TRÈS ÉLEVÉES ET PROCÉDÉ DE FONCTIONNEMENT D'UN SYSTÈME DE TRANSPORT DE TUBES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.10.2020 SA 120420159**

(43) Date of publication of application:
**30.08.2023 Bulletin 2023/35**

(73) Proprietor: **Rudolf, Alexander**
**8280 Kreuzlingen (CH)**

(72) Inventors:
• **RUDOLF, Alain-Daniel**
**78467 Konstanz (DE)**
• **RUDOLF, Alexander**
**8280 Kreuzlingen (CH)**

(74) Representative: **Wächtershäuser & Hartz Patentanwaltspartnerschaft mbB**
**Weinstraße 8**
**80333 München (DE)**

(56) References cited:
WO-A1-2019/162068     CN-A- 105 253 150
CN-U- 203 974 809      JP-A- 2005 119 630
US-A1- 2020 239 036    US-B1- 10 286 927
US-B2- 10 538 254      US-B2- 8 468 949

## Description

## Field of the Invention

The present invention relates to a tube transport system for very high vehicle speeds and a method of operating such a system under high vacuum. Moreover, the present invention relates to a tube transport system comprising a specific tube assembly. The tube assembly is fit to operate as a stand-alone system above ground and, with adaptations, underground or inside a tunnel as well as under or above water.

## Background of the Invention

High-speed tube transportation systems under partial vacuum or pneumatic systems have been in use and discussed for about 200 years. In 1799, George Medhurst proposed to move goods through steel pipes using pressurized air. In the 2nd half of the 19th century, several pneumatic railway systems have been operated in London, Dublin, New York, and Paris. In the beginning of the 20th century, the rocket scientist Robert Goddard designed a magnetically levitated train inside a sealed tunnel. A very serious attempt to realize such a system was the Swissmetro with a comprehensive study between 1989 and 1998. Due to political and fiscal priorities, this project was postponed. In 2012, Elon Musk issued a white paper with ideas of the Hyperloop® and reanimated the idea of a high-speed tube transportation system in a partial vacuum. The Hyperloop® is set up as an open source research project and attracted groups of scientists and business organizations to work on the best concept of a magnetic train in a partial vacuum. As far as is known, all these systems vehicles are operated with reduced drag in a sealed tube system under partial vacuum. The objective is to move passengers at high speed with short travel times.

In the most recent Hyperloop® concepts, the maximum velocity of the vehicle is believed to be physically or economically limited by the so-called "Kantrowitz Limit". This refers to the aerodynamic phenomenon where the flow in the annular gap between the vehicle and the tunnel reaches sonic speed, is hence said to be "choked". In order to increase the feasible vehicle speed, such systems operate in a partial vacuum with pressure levels as low as 100 Pa, i.e. the density is 1000 times smaller than under atmospheric pressure. As helium and hydrogen have a speed of sound of about 1000 m/s and 1300 m/s, respectively, it has been suggested to combine the employment of a low pressure and the use of helium, hydrogen or a mixture of these gases in the tube holding the vehicle as discussed in US 10,286,927 and US 10,286,928.

Further, the problem of friction between the rail and the wheel in high-speed tube transportation systems is often addressed by magnetic levitation as discussed e.g. in US1020942.

Despite such a long history, distinct technical approaches, and significant efforts, it is not known that such a high-speed tube transportation system has been realized. A major obstacle appears to be the aerodynamics. So far, the common understanding is that the vehicle speed cannot exceed the "Kantrowitz Limit" (this term is used to refer to the first occurrence of choking) and that reducing the pressure level below 100 Pa is economically not viable.

The method central for this invention is suitable and required to overcome these limitations. It is suggested to reduce the pressure level further so that a vehicle in an enclosed tunnel system moves with no aerodynamic resistance, i.e. when the Knudsen number exceeds unity.

While it is agreed that reducing and maintaining a high-vacuum is challenging, the aerodynamic problems of high-speed transportation in a partially evacuated tube is problematic. It appears that these problems have so far impeded the realization of such a system, even at the discussed low pressure levels around 100 Pa. In an attempt to reduce the far field aerodynamics, Rudolf (thesis 1806, EPFL, Switzerland, 1998) suggested the use of a turbine to push the air through the vehicle rather than having it flow around it and creating pressure waves. This idea has been reiterated in the white paper of Elon Musk from 2012 and in US 9,511,959 from 2016.

If compared to other inventions in this field, it swaps the challenge of defying the aerodynamic under cruising conditions with the challenge to create and maintain a high vacuum efficiently. In return, the method rewards with the following advantages: no aerodynamic effects during cruising, reduced and well predictable loads on the tube system, smaller tunnel diameter, increased stability of the system, symmetrical arrangement of the entire system, reduced number of vacuum pumps and seals, no aerodynamic speed limit, smaller propulsion power, reduced travel times and smaller vehicles. Moreover, emergency exits and stations are possible with no leakages and short evacuation or exchange times.

The Hyperloop is a recent proposal for a high-speed vacuum tube transportation system which is suggested to operate at approximately 100 Pa of pressure as disclosed in general terms in US 5,950,543 and US 9,511,959. Evacuating the tube and maintaining the vacuum in the tube at a level below 100 Pa has apparently been found to be unviable, especially if the tube path has a length of hundreds of kilometers. The initial evacuation of the tube may entail a significant investment due to the required number of vacuum pumps, seals, control equipment and energy to achieve the required pressure level in the tube.

To maintain the pressure at the required level, all air entering the system by leakages must be evacuated. Leakages are a major concern in all evacuated tube transport systems, and it has not been shown so far that with the currently employed methods, the targeted pressure level of 100 Pa can be achieved for full-size Hyperloop test installations. In principle, commercially available vacuum pumps may be used to evacuate the tube. The number of vacuum pumps needed as well as the energy required depend upon the tube volume to be evacuated, the degree of vacuum to be achieved, the leakages and the time allotted to initially evacuate the tube volume.

Each seal of a vacuum pump, emergency exit, seam or door in the stations causes leakages, increasing with the tube diameter. A fundamental challenge in all current Hyperloop concepts is the number of seals required to separate the inside of the tube from ambient conditions.

US 10,538,254 B2 addresses above problem by evacuating a tube for high-speed vacuum transportation systems with the vehicle only. If the vehicle is used to sweep particles, the number of expensive vacuum pumps and pressure seals is reduced. US 10,538,254 B2 also contains measures that are more tolerant for the dimension of the gap between the inner surface of the tube and the exterior of a vacuum tube vehicle used to evacuate the tube. Accordingly, US 10,538,254 B2 discloses a vacuum transport tube system and a method for evacuating a vacuum transport tube by a dedicated vehicle. The vehicle has a first end having a first end outer surface. An annular gap is formed between the first end outer surface and an inner surface of the vacuum transport tube. The vehicle has a second end having a second end outer diameter, and a body in the form of a piston with a structural framework. The vehicle has an orifice extending from a first inlet portion in the first end to a second outlet portion of the vehicle. Air flow is through the annular gap and the orifices from the front to the aft of the vehicle. The vehicle reduces the pressure with each successive pass by expanding the air in the zone behind the vehicle and extracting the compressed air from the tube, until a desired pressure is obtained, and the desired vacuum level is created in the interior of the tube.

The method of US 10,538,254 B2 requires a dedicated wheel guided vehicle sweeping gas particles from the inner space of the tube. Moreover, it requires that gas particles flow from the front end orifice across the vehicle to the rear end orifice as well as through the annular gap between the vehicle and the inner wall of the tunnel in order to create a pressure difference between the space in front and rear of the vehicle. Its panels surrounding the vehicle can be dynamically are designed to adapt to non-uniformities in the tunnel diameter. The panels allow air to flow between the panels on an outer wall of the vehicle. The vehicle targets the creation of the required vacuum level in current Hyperloop projects, i.e. around 100 Pa, but it is not disclosed how this method can create a high vacuum. As the method requires flow from the front to the rear of the vehicle, a significant amount of gas particles will always remain inside the system. The method is therefore not suitable to reach a gas environment with Kn > 1 and to reach vehicle speeds exceeding sonic speed of the gas mixture employed. Further examples of a tube transport system for a vehicle are known from CN 105 253 150 A, US 8 468 949 B2 and JP 2005 119630 A.

## Disclosure of the Invention

The present invention discloses a particular method for creating and maintaining a high vacuum efficiently and to operate a vehicle in a tube system with very high speeds.

According to the first aspect, the present invention provides a method of operating a tube transport system, the tube transport system comprising

    (a) tube assembly comprising

        (a-1) an outer tube;
        (a-2) one or more inner tubes received and held in the outer tube so that an annular space is formed between adjacent tubes; and
        (a-3) a support structure for holding the outer tube;

            the tube assembly having an inner wall surface defining an inner space for receiving and guiding a vehicle along a path extending from a first end to an opposite second end of the tube assembly,
            the tube assembly having one or more pressure valves or nozzles for releasing gas particles from the inner space; and

    (b) a vehicle having an outer wall surface defining an annular gap between the outer wall surface of the vehicle and the inner wall surface of the tube assembly

the method comprising

        (i) moving the vehicle along the path toward the first end at a velocity above the choking limit of the flow of the gas particles in the annular gap, while releasing gas particles from the inner space of the tube assembly in front of the vehicle; followed by
        (ii) reversing the direction of motion and moving the vehicle along the path toward the second end at a velocity above the choking limit of the flow of the gas particles in the annular gap while removing gas particles from the inner space of the tube assembly in front of the vehicle.

According to the second aspect, the present invention provides a tube transport system comprising a high-speed vehicle for a closed system operating under a vacuum, the tube transport system having

    (a) a tube assembly comprising

(a-1) an outer tube;
(a-2) one or more inner tubes received and held in the outer tube so that an annular space is formed between adjacent tubes; and
(a-3) a support structure for holding the outer tube;

the tube assembly having an inner wall surface defining an inner space for receiving and guiding the vehicle along a path extending from a first end to an opposite second end of the tube assembly,
the tube assembly having pressure valves or nozzles for removing gas particles from the inner space; the pressure valves or nozzles being provided at the first end and opposite second end of the tube assembly and

(b) the vehicle having an outer wall surface defining an annular gap between the outer wall surface of the vehicle and the inner wall surface of the tube assembly.

The method of the present invention is suitable to provide efficiently a high vacuum (pressure below 0.1 Pa) within the tube receiving and guiding a high-speed vehicle in the tube transport system. The tube transport system disclosed here provides efficient and safe transport of passengers or goods at velocities well above those being discussed so far in similar systems.

The use of

- the choking effect in the annular gap between the vehicle and the surrounding tube and
- several vested and aerodynamically corresponding tubes with radially decreasing pressure levels

are proposed to reach the beforementioned objectives and are central aspects disclosed in this invention.

The use of the choking effect in the annular gap between the vehicle and the inner surface of the surrounding tube limits the flow around the vehicle and allows therefore to gather more fluid particles in the space between the front of the vehicle and the corresponding tube end, where they can be released or extracted efficiently at a high density. After several passes of the vehicle in both directions, a low pressure is reached in the inner tube. In this operational condition, all fluid particles passing the vehicle can be extracted via lateral openings and either stored inside the vehicle or expelled in front of the vehicle, where they can be compressed and released or extracted from the inner tube.

This method is essential and sufficient to reach and maintain the pressure level required to operate the vehicle free of friction. This is the case when the mean free path of the gas particles is longer than the width of the annular gap between the vehicle and the inner surface of the surrounding tube, i.e. when the Knudsen number is above unity ($Kn > 1$) or the pressure is between 0.1 Pa and $10^{-7}$ Pa.

The present invention is based on the recognition that a high vacuum may be achieved within the tube transport system by making use of the choking effect in the annular gap between a vehicle and the inner surface of the inner tube. Once high vacuum is achieved, the Knudsen number is above unity and the vehicle moves free of friction. In addition, the present invention suggests to employ a system of vested tubes to allow a step-wise increase of the pressure from the inner tube to the outside. Both, the multi layered tube system and the use of the choking effect are central aspects of the tube transportations system and the method how it is used disclosed here.

Choked flow acts as a seal limiting the flow around the vehicle. As a result, gas ahead of the vehicle is compressed and gas behind the vehicle is expanded.

As long as the pressure in the inner tube is still high, choking occurs at relatively low speeds of the vehicle moving in a first direction. In this phase, air must be released or extracted from the pressure side to adjacent annular spaces. Repeating the step in the opposite second direction, and repeating the steps again provides a very low pressure level enabling efficient and safe transport at extremely high velocities using a vehicle of the present invention.

When the vehicle is cruising under high-vacuum with a very high speed, the choking effect allows to concentrate the few gas particles present in the inner tube at a location adjacent to the vehicle. Further, the chocking provides a determined flow condition in terms of velocity and density. In this phase, the choking effect can be efficiently used by extracting gas particles from the choked area into the vehicle and store it there.

The low pressure level is made possible and maintained based on a tube assembly having at least an annular space between an outer tube and an inner tube wherein a reduced pressure may be established and maintained, and which is in fluid flow communication with the inner space of the tube assembly for receiving gas particles released from the inner space.

The tube transport system of the present invention comprises a high-speed vehicle for a closed system operating under a vacuum, which is preferably using magnetic forces for guidance and propulsion. The tube transport system of the present invention operates at a very low pressure level, i. e. in an environment where the mean free path of the air particles is in the order of the characteristic dimensions of the vehicle, in particular the width of the annular gap. Accordingly, a Knudsen number is above unity at a pressure level of at most 0.1 Pa, preferably about 0.0001 Pa corresponding to the pressure in about 200 km altitude, which would eliminate the aerodynamic drag and allow substantially higher speeds up to the comfort levels.

## Brief Description of the Figures

Fig. 1 a) shows schematically a tube transport system 100 of the present invention for use in the method of the present invention.

Fig. 2 a) shows schematically a vehicle 6 moving in a tube transport system of the present invention from the first end 7 to the second end 8.

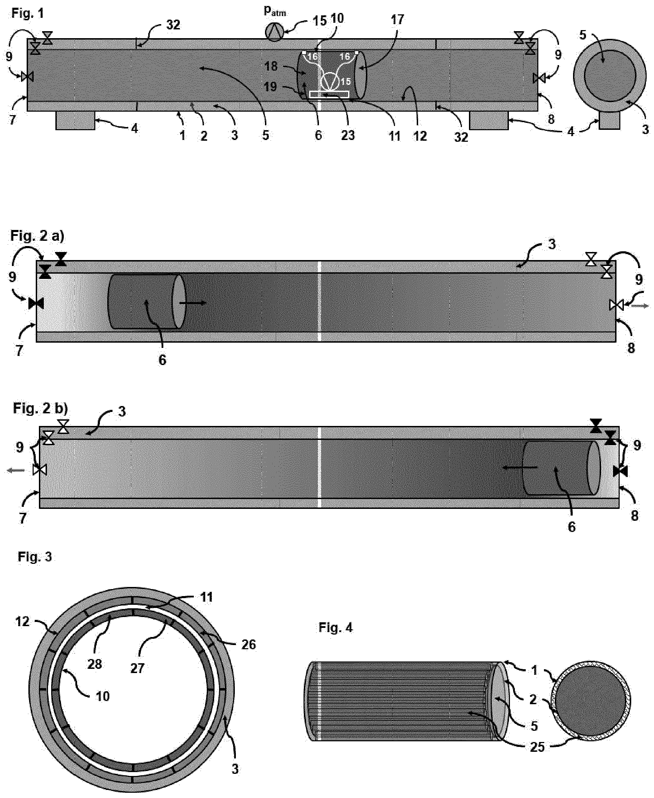

Fig. 2 b) shows schematically a vehicle 6 moving in a tube transport system of the present invention from the second end 8 to the first end 7.

Fig. 3 shows schematically a cross section through the tube assembly 101 in a tube transport system of the present invention with the electrotechnical installations used to guide and propel the vehicle 6.

Fig. 4 shows schematically a tube assembly 101 of the present invention with an outer tube 1 and an inner tube 2.

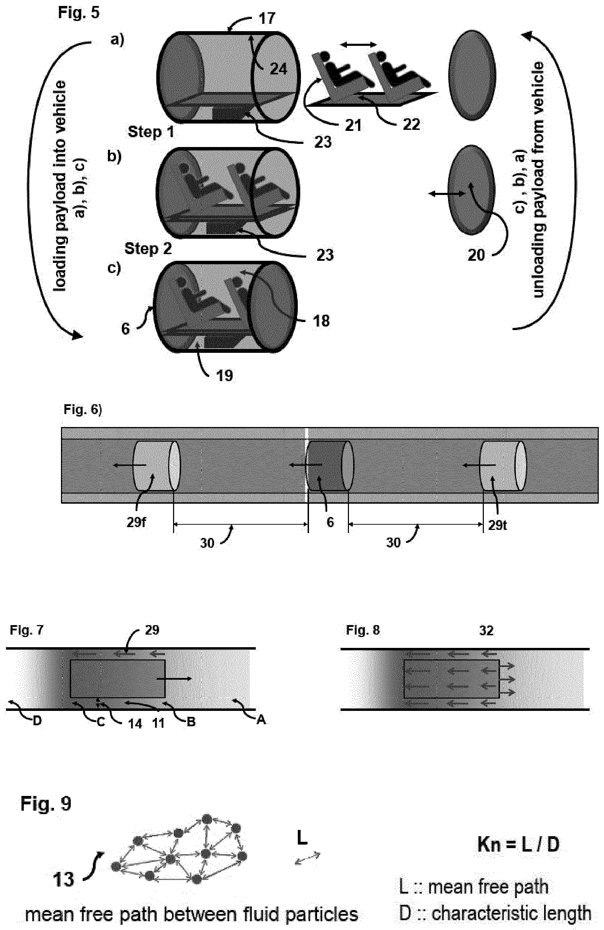

Fig. 5 schematically displays the method of loading / unloading the payload 22 into / from the vehicle 6.

Fig. 6 shows an embodiment of the method of operating safety vehicles 29 ahead and behind the passenger vehicle 6.

Fig. 7 shows the condition of choked flow in the annular gap 11 with a width 14.

Fig. 8 displays an emergency braking method by expelling gas particles stored in the gas tank 23 in front of the vehicle and creating choked flow in the annular gap.

Fig. 9 shows gas particles moving freely in space, the gas particles traveling a certain distance (free path) before colliding with another particle.

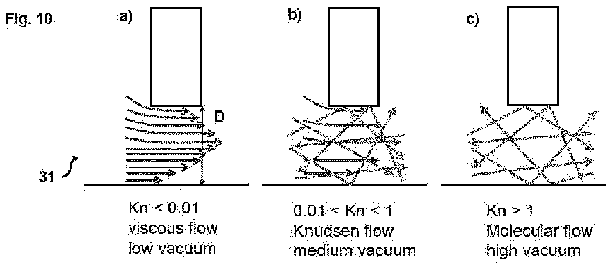

Fig. 10 shows 3 different flow regimes relevant in the context of the present invention.

## Detailed Description of Preferred Embodiments

In general, the Knudsen number is a dimensionless number defined as the ratio of the molecular mean free path length to a representative physical length scale. For the purpose of the present invention, the Knudsen number is defined as the ratio of the molecular mean free path length of the gas particles in the annular gap to the maximum width of the annular gap.

The mean free path L is determined according to the following formula:

$$L = \mu/\rho \; (\pi K_B T/2m)^{-1/2}$$

wherein

$\mu$ is the dynamic viscosity, $\rho$ is the density, $K_B$ is the Boltzmann constant, T is the thermodynamic temperature, and m is the molecular mass of the gas particle. For the purpose of the present invention, it is sufficient to determine the mean free path to a precision of 10 cm.

In the context of the present invention the ambient pressure outside the tube is the atmospheric pressure near sea level, i.e. about 100 kPa. High-vacuum is commonly referred to as pressure level of 0.1 Pa to $10^{-7}$ Pa.

The evacuated tube transport system in this invention operates under high vacuum, preferably under pressure of $10^{-1}$ to $10^{-4}$ Pa. The process of compressing the air in front of one or more vehicles and releasing or extracting the air from there in several cycles is preparatory for the operating condition. The pressure level in the annular spaces formed by the vested tubes during normal operation is between ambient pressure and the high vacuum in the inner space. Before operating conditions are reached, the gas particles from the inner tube can be pushed from the inner tube to the adjacent annular spaces creating temporarily a pressure level above ambient pressure in the inner tube and the annular spaces.

The method of operating a tube transport system of the present invention foresees the use of the choking effect to efficiently and thoroughly compress air and to sweep remaining gas particles from the system. It is employed in the following stages of operating a tube transport system

1) when the pressure level of the tube receiving the vehicle is still above operational conditions and the tube is being evacuated and

2) when the tube receiving the vehicle is already evacuated and leakages require the continuous removal of gas particles while the vehicle is cruising with very high speed under operational conditions, i.e. high-vacuum.

The tube transport system comprises a tube assembly for receiving one or more vehicles. The tube assembly has an inner tube diameter which may be selected to be preferably at most 2.0 m, more preferably at most 1.5 m. The tube assembly comprises two or more layers with different pressure. In a double layer outer wall, a first inner tube is received within another slightly larger outer tube so that an annular space is created between the inner and outer tubes. The thickness of the walls of the tubes depends on the material used for the tubes and usually is independently selected in the range of from 1 cm to 10 cm, more preferably 2 to 5 cm. The width of the annular space may be in the range of from 1 cm to 20 cm, more preferably in the range of from 5 cm to 10 cm. Moreover, an inner space for transport is formed by the inner tube.

For operational conditions, the pressure level in the inner space used for transport will preferably be reduced 0.1 Pa to $10^{-4}$ Pa. The annular space surrounding the inner tube will maintain a pressure level of 10 Pa to 100 Pa, incidentally corresponding to the current operational pressure level of the Hyperloop®. If other annular spaces are present, their pressure is between the first annular space and ambient conditions.

The material of the tube is not particularly limited as long as the material has very low leakages, withstands the pressure differences and the forces due to the lateral acceleration of the vehicle and provides a satisfactory level of protection against external influences. Examples of the materials are aluminum, graphite fiber reinforced plastic (GFP), glass fiber reinforced concrete (GFC), magnesium, titanium or a combination of the beforementioned materials.

Without unduly obstructing the flow along each annular space, the annular spaces may be filled with a honeycomb or riblet structure or any bulk material, e.g. sand or small spheres between adjacent tubes for additional stiffness. The annular spaces may also be filed with a mixture of gases suitable to improve the maintenance of the high-vacuum in the inner tube, to support the evacuation process and improve the aerodynamic properties of the vehicle.

The complete tube assembly is connected via the outer tube to a support of an elevated guideway, a tunnel or a suspension below or above water. The inner tube contains electromechanical installations required to guide and propel the vehicle as well as sensors to ensure that any unusual operating condition is detected in an early stage. The connections between the tube wall and the external or internal installations must transfer the required forces and are designed to avoid leakage.

The method of the present invention comprises propelling and guiding the one or more vehicles in the tube, preferably at a maximum speed of at least 80 m/s while controlling the mean free path of any gas particles present in the tube to be longer than the annular gap by sweeping gas particles with the propelled one or more vehicles. More preferably, the maximum speed is at least 300 m/s, still more preferably the maximum speed of at least 1000 m/s.

The Method of Operating a Tube Transport System

The present invention relates to a method of operating a tube transport system. The method may be used for the transport of passenger or goods over a distance. Preferably, the distance is at least 5 km, more preferably at least 50 km. The maximum distance is not particularly limited as long as a suitable tube assembly may be provided. Accordingly, the distance may be up to 100 km, preferably up to 1000 km or even more.

The tube transport system comprises a tube assembly and one or more vehicles. The tube assembly is used for receiving and guiding the vehicle along a path.

The tube assembly comprises an outer tube. The outer tube is required to withstand atmospheric pressure when the inside is under vacuum.

The tube assembly comprises one or more inner tubes received and held in the outer tube so that an annular space is formed between adjacent tubes. According to the present invention, the tube diameter may be reduced to about 1.5 m and will preferably consist of a double layer outer wall (or one tube within another, slightly larger one). Both, the diameter and the double-layer wall contribute to a very solid and safe environment for the passenger vehicles.

The outer ring will maintain a pressure level of preferably about 100 ... 1000 Pa and the pressure in the inner tube will preferably be reduced to 0.0001 Pa = $10^{-4}$ Pa. The tube material must withstand the mentioned pressure differences and is also charged with the forces due to the lateral and longitudinal acceleration of the vehicle.

The one or more annular spaces are in fluid flow communication through control means such as valves, orifices or nozzles and pumps with the inner space so that fluid flow can be suppressed or maintained between annular spaces through the control means for creating a controlled pressure drop between adjacent annular spaces and the inner space, whereby the pressure in the annular spaces is between the ambient pressure and the pressure level in the inner space.

Preferably, the one or more inner tubes and/or the outer tube are made of aluminum, glass fiber reinforced plastic (GRP), glass fiber reinforced concrete (GFRC), carbon fiber, titanium, magnesium or any combination of these materials.

Preferably, the one or more annular gaps contain a filling material partially filling the annular gaps while allowing fluid flow communication along the path.

The tube assembly comprises a support structure for holding the outer tube. The outer tube is connected to the support of an elevated guideway or a tunnel. The inner tube will contain the mechanical installations required to guide and propel the vehicle. The connections between the tube wall and the external or internal installations must transfer the required forces and are designed to avoid leakages.

The tube assembly having an inner wall surface defining an inner space for receiving and guiding a vehicle along a path extending from a first end to an opposite second end of the tube assembly.

The tube assembly having one or more pressure valves or nozzles for releasing gas particles from the inner space.

Preferably, the portion of the electro-magnetic guidance and propulsion system installed in the inner tube provides additional stability to the inner tube. This may be achieved by grouting the electric conductors, which are preferably flat, in artificial resin and then attach them over the full perimeter onto the inner surface of the inner tube.

Preferably, the portion of the electro-magnetic guidance and propulsion system installed on the vehicle provides additional stability to the vehicle body. In analogy to stiffening the tube, the electro-magnetic guidance and propulsion system may be grouted in artificial resin and then attached over the full perimeter of the vehicle hull.

Preferably, the portion of the electro-magnetic guidance and propulsion system installed in the inner tube is installed symmetrically alongside the tube to keep the vehicle in the center of the tube. This symmetric arrangement on the tube allows to use the available perimeter fully for powerful propulsion and guidance and stiffness.

Preferably, the portion of the electro-magnetic guidance and propulsion system installed on the vehicle is installed symmetrically alongside the vehicle to keep the vehicle in the center of the tube. This symmetric arrangement on the vehicle hull allows to use the available perimeter fully for powerful propulsion and guidance and stiffness.

The tube transport system further comprises a vehicle having an outer wall surface defining an annular gap between the outer wall surface of the vehicle and the inner wall of the tube assembly.

Preferably, the vehicle comprises a cylindrical housing enclosing one or more compartments for payload (passengers or goods) and one or more service compartments, and having a releasable sealable port for accessing the passenger compartment.

Moreover, the passenger vehicle comprises one or more seats adapted to be removed from the passenger compartment for loading and unloading the passengers, which seats are adapted to be secured to the cylindrical housing in the passenger compartment when loaded with passengers.

Preferably, the vehicle further comprises one or more orifices in the annular space to extract gas particles alongside the vehicle for storage in a tank in the service compartment of the housing.

Preferably, the inner surface of the housing of the vehicle being equipped with a thin luminescent layer allowing the change of color and brightness or the display of a virtual reality, possible using hologram technology giving the passengers a 3-dimensional impression.

Preferably, the vehicle further comprises a system using flat surfaces for the generation of sounds and to transport verbal information or music to the passengers.

Preferably, the passenger seats can be actuated to increase comfort and driving experience. This refers to an actuation of the passenger seats to balance lateral acceleration and to adapt to the displayed virtual reality.

Preferably, the vehicle is equipped with facilities to open the housing from within and to release the passenger compartment from the housing in case of an emergency.

Preferably, the vehicle being equipped with a braking system using a gas cushion created by expelling stored gas particles.

Preferably, the vehicle being equipped with electrical equipment for propulsion and guidance.

Preferably, the vehicle being equipped with electrical equipment to transfer electrical energy by sliding contact or wireless from the outside to its inside and to store electrical energy.

The vehicle is preferably light as this is essential to reach top speeds with reasonable energy requirements. The very low pressure level and the elimination of the driving aerodynamics is the precondition for a light vehicle.

The vehicle does not require an aerodynamic form; it will preferably have a cylindrical shape with adaptations to the required technical equipment onboard. It may be split in an upper part for the payload, i.e. passengers or goods; whereby the lower part may be used for the electro-magnetic installations required for its propulsion. The extremities may contain additional technical equipment, such as vacuum pumps, the tools for the emergency brake and emergency exit. Additional installations for the guidance may be added along the vehicle at its outer wall.

Most of the space can be used for the payload, however, there are some features which need to be added to the vehicle, for which some space in the front or at its rear end may be foreseen.

It is not foreseen that the passengers, once seated, will get up and move inside the vehicle, except in case of an emergency for evacuation. Hence, the loading procedure will cover the following steps:

1. seating of the passengers,
2. displacing the seats into a cylindrical vehicle body,
3. closing the vehicle,
4 displacing the tunnel section loaded with the vehicle into the tube assembly..

Preferably, the tube transport system further comprises one or more vacuum pumps for creating and maintaining a vacuum level in an annular space of the tube assembly.

The method of the present invention comprises a step (i) of moving the vehicle along the path toward the first end at a velocity above the choking limit of the flow of the gas particles in the annular gap, while removing gas particles from the inner space of the tube assembly in front of the vehicle.

Subsequently, the method of the present invention comprises a step (ii) of reversing the direction of motion and moving the vehicle along the path toward the second end at a velocity above the choking limit of the flow of the gas particles in the annular gap while removing gas particles from the inner space of the tube assembly in front of the vehicle.

Preferably, the steps (i) and (ii) are repeated until the mean free path of the gas particles present in the tube assembly is longer than the width of the annular gap.

When the mean free path of the gas particles present in the tube assembly is longer than the width of the annular gap one or more vehicles may be propelled and guided in the tube assembly at a maximum speed of at least 80 m/s, preferably at least 300 m/s, and still more preferably at least 1000 m/s. Preferably, the vehicle is adapted to sweep gas particles from the annular gap of the tube assembly, preferably via lateral openings.

According to a preferred method of the present invention, vehicles are operated in pairs or in triplets so that ahead and/or behind of each passenger vehicle a safety vehicle is operated at a predetermined distance. Accordingly, the method comprises that the safety vehicles are preferably equipped with sensors and communication equipment to detect and report any unusual operating condition. Moreover, the method further comprises that the safety vehicle carries gas particles to help slowing down any of the vehicles in the case of an emergency situation. Moreover, the method further comprises that the safety vehicles is preferably equipped with pressure locks to separate the passenger vehicle from the remaining tube system. Finally, the method comprises the safety vehicles, preferably to carry luggage of the passengers.

Preferably, one or more vehicles are operated so that choking is achieved in the annular gap between the outer vehicle body and the inner surface of the inner tube.

Preferably, means are provided on the vehicles which can be used to extract the fluid particles from the annular space and to store them inside the vehicle body.

Preferably, means are fixed to the tubes which can extract the compressed air from the zone in front of a vehicle.

Preferably, the outer tube is provided with a surface sensitive to solar radiation creating energy at the outside of the outer tube. Moreover, means are preferably provided to gather and store the solar energy produced. Finally, means are preferably provided to reduce the $CO_2$ content of the air surrounding the tubes.

Preferably, the vehicle comprises a braking system using mechanical, magneto-electrical or aerodynamics means to slow down the vehicle, in particular by creating a flow around the vehicle with expelled gas particles formerly stored in the service compartment; and/or wherein the vehicle comprises electrical equipment for propulsion, guidance and braking.

The Tube Transport System

According to the present invention, the tube transport system comprises a tube assembly. The tube assembly comprises an outer tube, one or more inner tubes received and held in the outer tube so that an annular space is formed between adjacent tubes; and a support structure for holding the outer tube.

The tube assembly has an inner wall surface defining an inner space for receiving and guiding a vehicle along a path extending from a first end to an opposite second end of the tube assembly. The tube assembly has one or more pressure valves or nozzles for removing gas particles from the inner space.

The tube assembly further comprises a vehicle having an outer wall surface defining an annular gap between the outer wall surface of the vehicle and the inner wall of the tube assembly.

The tube assembly of the present invention is a multiple layer tube. One tube is vested in others or a tube with several wall layers is used to create multiple pressure levels between the atmosphere and the inner tube used for the circulation of the vehicle. As a default solution, only two tubes and pressure levels in the tube arrangement are used, but there may be solutions with 3 or more wall layers. A multi-layer tubular system may be used for a stepwise reduction of the pressure level from ambient to the inner tube. The pressure reduction may be achieved by extracting or adding liquid or fluid from or by circulating the liquid or fluid across nozzles, orifices or valves between the corresponding chambers of the tube.

A sandwich / honeycomb / riblet structure between the two tubes or outer tubes filled with a material, e.g. sand, suitable to protect the inner tube and to strengthen the multiple layer tube construction is contemplated. The outer rings of the tubes may be filled with sand, any other bulk material, riblets, sandwich or honeycomb material in order to protect the system against arson attacks from the outside (e.g. bullets, small explosives) and to improve the stiffness of the entire structure. This filling is distributed in a way that the fluid exchange along the tubes is not restrained, i.e. riblets have openings in radial direction, sand is coarse enough to allow the flow of fluids along the tubes.

The tubes may be filled with a mixture of Helium and Hydrogen or any other gas in order to improve the evacuation of the inner tube and the aerodynamic behavior of the vehicle.

It is expected that if the multiple tube system is filled with a mixture of Helium, Hydrogen and any other gas, the vacuum can be created or maintained better, leakages be reduced, and the remaining aerodynamic behavior of the vehicle improved. In this case, air might be exchanged with these gases.

A reduced pressure in the tube may be used to accelerate any type of object free of aerodynamic forces to reach very high speeds over a short distance.

A tube may be made with glass fiber reinforced plastic (GRP), glass, metal, concrete or carbon or a mixture of any of these materials. The tubes may be produced on or off site. In particular, a rig suitable to produce a seamless or fused tube with several layers with machines carrying and processing the material used to produce these tubes on site may be used.

The tube assembly may allow the opening of windows for an emergency exit anywhere along the tube. Installations on the tube required to prepare the creation of an emergency exit anywhere along the tube are contemplated. Moreover, a tube allowing the separation of a tube section to create a revolving station is also considered.

The present invention also contemplates installations on the tube required to prepare the airtight separation of a tube section from the rest of tube in order to prepare the exchange of a tube section as foreseen in the stations. Supports for the tubes and junctions between these supports and the tubes suitable to withstand the occurring forces and to maintain the vacuum with almost no leakages may be provided. The tubes may be equipped with solar panels either as an integral part of the tube or attached to produce energy which may be used for the operation of the vehicle.

The vehicle may be a light weight vehicle with a classical concept and a large diameter allowing the boarding and exiting of passengers via doors and an aisle the displacement of the vehicle into a tunnel section used as exchange.

The light weight vehicle may preferably be provided with a modular structure and a small diameter allowing the boarding and exiting of passengers on the seats, the displacement of the seated passengers into the vehicle, the airtight closure of the vehicle at its ends, and the displacement of the vehicle into a tunnel section used as exchange.

The vehicle may be provided with mechanical installations / pumps / turbines for the sweeping / extraction and compression of air. Mechanical installations for the exchange of collected air in the stations may also be provided. Pumps or turbines for the creation of an air cushion used as brake are also contemplated. Mechanical or electro-mechanical installations for the creation of eddy currents used as brake are disclosed. Tools and installations to be used to create an emergency exit are contemplated. A receiving device for energy transmission via laser or any other physically possible method is disclosed. For the brakes, installations on board of the vehicles suitable to create an air flow around the vehicle with the objective to slow down the vehicle at any given moment, mechanical brakes or electromagnetic brakes (eddy currents) may be used.

Conventional propulsion systems may be selected from linear induction motors as used in a Transrapid. However, superconducting magnets, railgun technology, laser energy transmission, photon or ion-based propulsion and the required energy transmission to the vehicle are also contemplated.

A conventional levitation system composed of active magnets like in the Transrapid with attracting force may be used. However, the levitation and guidance system may also be based on superconducting magnets. Suitable superconductor materials may be selected from bulk Yttrium Barium Copper Oxide (YBCO) crystals or vapor deposited YBCO films. Propulsion systems as disclosed in US10000892B2 may be adapted to the purpose of the present invention.

According to a preferred embodiment, guidance systems may be installed in 120° angles alongside the tube to keep the vehicle always in the center of the tube. This would also provide some margin for lateral movements.

According to a preferred embodiment, stations may be revolving barrel stations comprising mechanism to load and unload a complete tunnel segment in the station. A separation of the station tunnel segment from the rest of the tube with no or little leakages is preferred.

According to a preferred embodiment, the present invention allows to create an emergency exit anywhere along the tube, characterized by tools on board of the vehicle together with installations at the inside of the tubes are used to create an emergency exit at the incident location, which could be everywhere along the tube, whereby the tools may include a cutter or pyrotechnics with carbide or other.

According to a further preferred embodiment, the present invention allows an escape procedure / sequence to evacuate the passengers from the narrow space inside the tube to the open.

The vacuum technology for the creation and the maintenance of the required vacuum levels may involve the use of any type of pumps to reach and maintain the required pressure levels or suitable for an extraction and compression of fluid particles on board the vehicle, a discharge at the stations, the making use of the choking effect to compress and collect remaining fluid particles on board the vehicle.

According to a preferred embodiment, the present invention allows to guarantee the integrity of the system before and during each trip by closely monitoring with: vibration sensor, alignment sensors, pressure sensors, temperature sensors, and/or Cameras.

For the safety concept, the following is preferred:

A safety vehicle preceding each passenger vehicle. A safety vehicle being used to carry the luggage of the passengers or any other goods or materials. An emergency stop system for the following passenger vehicle.

The present invention may be typically used as a long-distance transportation system.

The present invention will now be further illustrated with reference to the Figures.

Fig. 1 shows a tube transport system 100 for use in the method of the present invention. The tube transport system 100 comprises a tube assembly 101 and a vehicle 6.

The tube assembly 101 comprises an outer tube 1, and an inner tubes 2 received and held in the outer tube so that an annular spaces 3 is formed between the outer tube 1 and the inner tube 2. The tube assembly 101 further comprises a support structure 4 for holding the outer tube 1. The tube assembly 101 has an inner wall surface 12 defining an inner space 5 for receiving and guiding a vehicle 6 along a path extending from a first end 7 to an opposite second end 8 of the tube assembly. The tube assembly has one or more pressure valves or nozzles 9 for releasing gas particles from the inner space 5 and the annular spaces 3. A vacuum pump 15 is connected to the tube assembly 101 to extract gas particles from the annular space 3. The annular spaces are split longitudinally into compartments by the separators 32 extending from the outer surface of the inner tube 3 to the inner surface of the outer tube 1.

The vehicle 6 is represented in the form of a cylindrical housing 17 with an outer wall surface 10. The vehicle 6 contains a compartment designed to receive payload (passengers or goods) 18 and a service compartment 23. An annular gap 11 is formed between the outer wall surface of the vehicle 10 and the inner wall surface 12 of the tube assembly. A vacuum pump 15 is located inside the vehicle to extract gas particles from the annular gap 11 via lateral orifices 16; the gas particles can be stored in a tank 23 located in the service compartment 19.

Fig. 2 a) shows a vehicle 6 moving from the first end 7 to the second end 8. Compressed gas particles are released via valve 9 on the second end 8 to the outside and to the annular space 3.

Fig. 2 b) shows a vehicle 6 moving from the second end 8 to the first end 7. Compressed gas particles are released via valve 9 on the first end 7 to the outside and to the annular space 3.

Fig. 3 shows a cross section through the assembly 101 with the electrotechnical installations used to guide and propel the vehicle 6. The portion of the electro-magnetic guidance and propulsion system installed on the vehicle 27 and the electrical equipment to transfer electrical energy wireless 28 are displayed as an additional ring attached to the outer surface 10 of the vehicle. The portion of the electro-magnetic guidance and propulsion system installed on the inner tube 26 is displayed as a ring attached to the inner wall 12 of the tube assembly. The rings formed by the elements 26 and 27 / 28 enclose the annular gap 11.

Fig. 4 shows a tube assembly 101 with an outer tube 1 and an inner tube 2. Filling material 25 is positioned in the annular space between tubes 1 and 2. While filling material 25 is selected to provide additional stability to the tube assembly 101, it allows fluid flow inside the annular space from the first end 7 to the second end 8 of the tube assembly. In Fig. 4, the filling material 25 is composed of perforated tubes connected to the outer surface of the inner tube and the inner surface of the outer tube.

Fig. 5 displays the method of loading / unloading the payload 22 into / from the vehicle 6. Fig. 5 a) shows the situation where the lid 20 is open and the payload 22 is outside of the cylindrical housing 17 of the vehicle 6. In step 1, the payload (here: the passengers) are displaced from the outside of the vehicle into the passenger compartment 18 of the vehicle 6 with the result displayed in Fig. 5 b). Fig. 5 c) displays the vehicle after step 2 has been completed. In step 2, the lid 20 is displaced onto one end of the vehicle so that the vehicle is completely sealed. To unload the passengers from the vehicle, the above described steps are passed through in the opposite order, i.e. first the lid is removed from the vehicle and then the payload.

Fig. 6 displays the method of operating safety vehicles 29 ahead and behind the passenger vehicle 6. The distance 30 between the preceding safety vehicle 29 and the passenger vehicle 6 is chosen so that it is always possible to slow down the passenger vehicle without colliding with the safety vehicle 29f if it detects any irregular condition. The trailing safety vehicle 29t follows in a safe distance. The safety vehicles are equipped with sensors and tools to split the inner space 5 longitudinally into sections.

Fig. 7 displays the condition of choked flow in the annular gap 11 with a width 14. If a vehicle 6 moves in the inner tube 5 with gas particles, the gas particles will be compressed in front of the vehicle 6 and expansion will occur in the rear of the vehicle 6. The so created pressure difference between the front and the rear of the vehicle induces flow in the annular gap 11 from the front end of the vehicle to the rear end of the vehicle. Depending on the pressure level, the width of the annular gap 14 and the diameter of the inner tube 5, the flow against the driving direction in the annular gap reaches sonic speed, when the vehicle exceeds a certain speed. This phenomenon is called choking. When the flow is choked, the mass flow can no longer be increased, hence more gas particles will be pushed to the front. This invention makes use of the choking effect in order to sweep gas particles to the front of the vehicle where they can be released via valves or nozzles 9.

In Fig. 8 an emergency braking method by expelling gas particles stored in the gas tank 23 in front of the vehicle. The sudden increase of gas particles in front of the vehicle 6 induces a flow around the vehicle in the annular gap 11 in opposite direction to the driving direction. When the velocity is high and sufficient gas particles can be released, the flow in the annular gap is choked, which increases the pressure in front of the vehicle further. This method will slow down the vehicle .

Fig. 9 displays gas particles moving freely in space, the gas particles traveling a certain distance before they collide with another particle. This distance is averaged for all gas particles in a particular volume and over a particular time period defining the so called mean free path.

Fig. 10 shows 3 different flow regimes relevant for the invention.

Fig. 10 a) shows viscous flow as it is described by the classical fluid dynamics, where the fluid is considered a continuum and the Navier-Stokes equations apply for viscous flow.

Fig. 10 b) displays the transition regime, the so called Knudsen flow, in which some gas particles behave like a continuum and others experience no significant mutual interaction.

In Fig. 10 c) all gas particles move freely in space. In this so-called molecular flow, the gas particles experience no friction. This flow is sought for normal cruising operation is this invention.

List of reference numerals:

1 : outer tube
2 : inner tube
3 : annular space between adjacent tubes (e.g. outer and inner tube)
4 : support structure for holding the outer tube
5 : inner space
6 : vehicle
7 : first end of tube assembly
8 : second end of tube assembly
9 : valve
10 : outer wall surface of vehicle
11 : annular gap
12 : inner wall of the tube assembly
13 : mean free path of the gas particles
14 : width of the annular gap
15 : vacuum pump
16 : one or more orifices in the annular gap
17 : cylindrical housing of vehicle
18 : compartment designed to receive payload
19 : one or more service compartments
20 : releasable sealable port for accessing the passenger compartment
21 : actuation of the passenger seats
22 : payload, i.e. passenger seats or goods fixed on a removable support structure
23 : gas tank
24 : inner surface of the passenger compartment
25 : filling material
26 : portion of the electro-magnetic guidance and propulsion system installed on the inner tube
27 : portion of the electro-magnetic guidance and propulsion system installed on the vehicle
28 : electrical equipment to transfer electrical energy by sliding contact or wireless
29 : flow of the gas particles in the annular gap
29' : safety vehicle
30 : predetermined distance between passenger and safety vehicle
31 : visualization of Knudsen number Kn
32 : compartmentation of the annular space

**Claims**

1. A method of operating a tube transport system under a vacuum, the tube transport system comprising

    (a) a tube assembly (101) comprising

        (a-1) an outer tube (1);
        (a-2) one or more inner tubes (2) received and held in the outer tube so that annular spaces (3) are formed between adjacent tubes; and
        (a-3) a support structure (4) for holding the outer tube;

            the tube assembly having an inner wall surface (12) defining an inner space (5) for receiving and guiding a vehicle (6) along a path extending from a first end (7) to an opposite second end (8) of the tube assembly (101),
            the tube assembly having pressure valves or nozzles (9) for releasing gas particles from the inner space (5), the pressure valves or nozzles (9) being provided at the first end (7) and opposite second end (8) of the tube assembly;

    (b) a vehicle having an outer wall surface (10) defining an annular gap (11) between the outer wall surface of the vehicle (10) and the inner wall surface (12) of the tube assembly;

the method comprising

    (i) moving the vehicle (6) along the path toward the first end (7) at a velocity above the choking limit of the flow of the gas particles in the annular gap (11), while releasing gas particles from the inner space (5) of the tube assembly in front of the vehicle (6); followed by
    (ii) reversing the direction of motion and moving the vehicle (6) along the path toward the second end (8) at a velocity above the choking limit of the flow of the gas particles (29) in the annular gap (11) while releasing gas particles from the inner space (5) of the tube assembly (101) in front of the vehicle (6).

2. The method of operating a tube transport system according to claim 1,

    wherein steps (i) and (ii) are repeated until the mean free path of the gas particles present in the tube assembly is longer than the width (14) of the annular gap (11), i.e. when the Knudsen number (31) is above unity,
    preferably until the pressure in the inner tube is $10^{-4}$ Pa or less, followed by propelling and guiding the one or more vehicles (6) in the tube assembly,
    preferably at a maximum speed of at least 80 m/s more preferably at a maximum speed of at least 300 m/s, still more preferably at a maximum speed of at least 1000 m/s.

3. The method of operating a tube transport system according to claim 1 or 2,

    wherein the tube transport system further comprises one or more vacuum pumps (15) for creating and maintaining a vacuum level in an annular space (3) of the tube assembly and/or wherein the vehicle is adapted to sweep gas particles from the annular gap of the tube assembly via lateral openings (16).

4. The method of operating a tube transport system according to any one of the preceding claims, wherein the one or more annular spaces (3) are in fluid flow communication through control means such as valves or nozzles (9) and pumps (15) with the inner space (5) so that fluid flow can be suppressed or maintained between annular spaces through the control means for creating a controlled pressure drop between adjacent annular spaces and the inner space, whereby the pressure in the annular spaces is between the ambient pressure and the pressure level in the inner space.

5. The method of operating a tube transport system according to any one of the preceding claims wherein

   - the one or more inner tubes (2) and/or the outer tube (1) are made of glass fiber reinforced plastic (GRP), glass fiber reinforced concrete (GFRC), carbon fiber, aluminum, titanium, magnesium or any combination of these materials; and/or
   - the one or more annular spaces (3) contain a filling material (25) partially filling the annular space while allowing fluid flow along the annular space (3).
   - the one or more annular spaces (3) are split in longitudinal direction by separators (32) forming hydraulically separated and sealed spaces.

6. The method of operating a tube transport system according to any one of the preceding claims, wherein the vehicle comprises:

   (b-1) a cylindrical housing (17) enclosing one or more passenger compartments (18) and one or more service compartments (19), and having a releasable sealable port (20) for accessing the passenger compartment; and
   (b-2) one or more seats (21) adapted to be removed from the passenger compartment for loading and unloading the passengers, which seats are adapted to be secured to the cylindrical housing in the passenger compartment when loaded with passengers (22).

7. The method of operating a tube transport system according to any one of the preceding claims, wherein the vehicle further comprises

   (b-3) one or more orifices in the annular space (16) to extract gas particles alongside the vehicle for storage in a tank in the service compartment of the housing (23); and/or

(b-4) the inner surface of the passenger compartment (24) being equipped with a thin luminescent layer allowing the change of color and brightness or the display of a virtual reality, possible using hologram technology giving the passengers a 3-dimensional impression; and/or
(b-5) the installation of a sound system; and/or
(b-6) the actuation of the passenger seats (21) to increase comfort and driving experience; and/or
(b-7) the vehicle being equipped with facilities to open the housing from within and to release the passenger compartment (18) from the housing in case of an emergency; and/or
(b-8) the vehicle being equipped with a braking system using a gas cushion created by expelling stored gas particles; and/or
(b-9) the vehicle being equipped with electrical equipment for propulsion and guidance (27); and/or
(b-10) the vehicle being equipped with electrical equipment to transfer electrical energy by sliding contact or wireless (28) from the outside to its inside and to store electrical energy

8. The method of operating a tube transport system according to any one of the preceding claims, wherein

   - the portion of the electro-magnetic guidance and propulsion system installed in the inner tube (26) provides additional stability to the inner tube; and/or
   - the portion of the electro-magnetic guidance and propulsion system installed on the vehicle (27) provides additional stability to the vehicle body; and/or
   - the portion of the electro-magnetic guidance and propulsion system installed in the inner tube (26) is installed symmetrically alongside the tube to keep the vehicle in the center of the tube; and/or
   - the portion of the electro-magnetic guidance and propulsion system installed on the vehicle (25) is installed symmetrically alongside the vehicle to keep the vehicle in the center of the tube.

9. The method of operating a tube transport system according to any one of the preceding claims, wherein vehicles are operated in pairs or in triplets so that ahead or behind of each passenger vehicle (6) a safety vehicle (29) is operated at a predetermined distance (30),
   the method comprising:

   (a) the safety vehicles (29) to be equipped with sensors and communication equipment to detect and report any unusual operating condition; and/or

(b) the safety vehicle carrying gas particles to help slowing down any of the vehicles in the case of an emergency situation; and/or

(c) the safety vehicles being equipped with pressure locks to separate the passenger vehicle from the remaining tube system; and/or

(d) the safety vehicles to carry luggage of the passengers

10. The method of operating a tube transport system according to any one of the preceding claims, the method comprising:

(i) multiple vehicles (6, 29) are operated so that choking is achieved in the annular gap (11) between the outer vehicle body (17) and the inner surface of the inner tube (12); and/or

(ii) means on the vehicles (16, 32) which can be used to extract gas particles from the annular space (11) and to store them inside the vehicle body (23); and/or

(iii) means fixed to the tubes (9, 15) which can extract the compressed air from the zone in front of a vehicle.

11. The method of operating the tube transport system according to any one of the preceding claims, the method comprising:

(i) a surface sensitive to solar radiation creating energy at the outside of the outer tube; and/or

(ii) means to gather and store the solar energy produced; and/or

(iii) means to reduce the $CO_2$ contents of the air surrounding the tubes.

12. The method of operating the tube transport system according to any one of the preceding claims, wherein the vehicle comprises a braking system using mechanical, magneto-electrical or aerodynamics means to slow down the vehicle, in particular by creating a flow around the vehicle (32) with expelled gas particles formerly stored in the service compartment (19); and/or wherein the vehicle comprises electrical equipment for propulsion, guidance and braking (27).

13. Tube transport system comprising a high-speed vehicle (6) for a closed system operating under a vacuum, the tube transport system having

(a) a tube assembly (101) comprising

(a-1) an outer tube (1);

(a-2) one or more inner tubes (2) received and held in the outer tube (1) so that an annular space (3) is formed between adjacent tubes; and

(a-3) a support structure (4) for holding the outer tube (1);

the tube assembly (101) having an inner wall surface (12) defining an inner space (5) for receiving and guiding the vehicle (6) along a path extending from a first end (7) to an opposite second end (8) of the tube assembly,

the tube assembly (101) having pressure valves or nozzles (9) for removing gas particles from the inner space (5), the pressure valves or nozzles (9) being provided at the first end (7) and opposite second end (8) of the tube assembly (101); and

(b) the vehicle (6) having an outer wall surface (10) defining an annular gap (11) between the outer wall surface (10) of the vehicle (6) and the inner wall surface (12) of the tube assembly (101).

**Patentansprüche**

1. Verfahren zum Betreiben eines Röhrentransportsystems im Vakuum, das aus folgenden Elementen besteht:

(a) eine Röhrenbaugruppe bestehend aus

(a-1) einem Außenrohr (1);

(a-2) einem oder mehreren Innenrohren (2), die in dem Außenrohr aufgenommen und gehalten werden, so dass zwischen benachbarten Röhren ringförmige Zwischenräume (3) gebildet werden; und

(a-3) eine Stützstruktur (4) zum Halten des Außenrohrs;

wobei die Röhrenbaugruppe eine Innenwandfläche (12) hat, die einen Innenraum definiert

(5) der ein Fahrzeug (6) aufnehmen und entlang einer Bahn führen kann, die sich von

einem ersten Ende (7) zu einem gegenüberliegenden zweiten Ende (8) der Röhrenbaugruppe (101) erstreckt.

wobei die Röhrenbaugruppe Druckventile oder Düsen (9)

zum Ablassen von Gaspartikeln aus dem Innenraum (5) hat, wobei die Druckventile oder Düsen (9) am ersten Ende (7) und am gegenüberliegenden zweiten Ende (8) der Röhrenanordnung vorgesehen sind;

(b) ein Fahrzeug mit einer Außenwandfläche (10), die einen ringförmigen Spalt (11) zwischen der Außenwandfläche des Fahrzeugs (10) und der Innenwandfläche (12) der Röhrenanordnung festlegt,
wobei das Verfahren umfasst

(i) Bewegen des Fahrzeugs (6) entlang der Bahn in Richtung des ersten Endes (7) mit einer Geschwindigkeit über der Drosselgrenze (choking) des Gaspartikelstroms im Ringspalt (11), während Gaspartikel aus dem Innenraum (5) der Röhrenbaugruppe vor dem Fahrzeug (6) herausgedrückt werden gefolgt von
(ii) einer Umkehr der Bewegungsrichtung und Bewegung des Fahrzeugs (6) entlang einer Bahn in Richtung des zweiten Endes (8) mit einer Geschwindigkeit über der Drosselgrenze (choking) des Gaspartikelstroms (29) im Ringspalt (11), während Gaspartikel aus dem Innenraum (5) der Röhrenbaugruppe (101) vor dem Fahrzeug (6) herausgedrückt werden.

2. Verfahren zum Betreiben eines Röhrentransportsystems gemäß Anspruch 1, wobei die Schritte (i) und (ii) wiederholt werden, bis die mittlere freie Weglänge der Gaspartikel in der Röhrenbaugruppe länger ist als die Breite (14) des Ringspaltes (11), d.h. wenn die Knudsen-Zahl (31) größer als eins ist, vorzugsweise bis der Druck im Innenrohr $10^{-4}$ Pa oder weniger beträgt, gefolgt vom Antreiben und Führen des einen oder der mehreren Fahrzeuge (6) in der Röhrenanordnung, vorzugsweise mit einer Höchstgeschwindigkeit von mindestens 80 m/s, noch bevorzugter mit einer Höchstgeschwindigkeit von mindestens 300 m/s, noch bevorzugter mit einer Höchstgeschwindigkeit von mindestens 1000 m/s.

3. Verfahren zum Betreiben eines Röhrentransportsystems gemäß Anspruch 1 oder 2, wobei das Röhrentransportsystem ferner eine oder mehrere Vakuumpumpen (15) zum Erzeugen und Aufrechterhalten eines Vakuumniveaus in einem ringförmigen Raum (3) der Röhrenanordnung und/oder wobei das Fahrzeug so ausgelegt ist, dass es Gaspartikel über seitliche Öffnungen (16) aus dem ringförmigen Spalt der Rohrbaugruppe entfernt.

4. Verfahren zum Betreiben eines Röhrentransportsystems gemäß einem der vorstehenden Ansprüche, wobei ein oder mehrere ringförmige Räume (3) über Steuerelemente wie Ventile oder Düsen (9) und Pumpen (15) mit dem Innenraum in aerodynamischer Verbindung stehen (5) in Fluidverbindung stehen, so dass der Fluidstrom zwischen den Ringspalten durch die Steuerelemente unterdrückt oder aufrechterhalten werden kann, um einen kontrollierten Druckabfall zwischen benachbarten Ringspalten und dem Innenraum zu erzeugen, wodurch der Druck in den Ringspalten zwischen dem Umgebungsdruck und dem Druckniveau im Innenraum liegt.

5. Verfahren zum Betreiben eines Röhrentransportsystems gemäß einem der vorstehenden Ansprüche, wobei

- eine oder mehrere Innenrohre (2) und/oder das Außenrohr (1) aus glasfaserverstärktem Kunststoff (GFK), glasfaserverstärktem Beton (GFRC), Kohlefaser, Aluminium, Titan, Magnesium oder einer beliebigen Kombination dieser Materialien bestehen; und/oder
- eine oder mehrere Ringspalte (3) ein Füllmaterial (25) enthalten, das den Ringspalt teilweise ausfüllt, während es einen Fluidstrom entlang des Ringspalts (3) ermöglicht.
- ein oder mehrere Ringspalte (3) in Längsrichtung durch Trennwände (32) unterteilt sind, die hydraulisch getrennte und abgedichtete Räume bilden.

6. Verfahren zum Betreiben eines Röhrentransportsystems gemäß einem der vorstehenden Ansprüche, wobei das Fahrzeug umfasst:

(b-1) ein zylindrisches Gehäuse (17), das einen oder mehrere Fahrgasträume (18) und einen oder mehrere Service-Räume (19) umschließt und eine lösbare, verschließbare Öffnung (20) für den Zugang zum Fahrgastraum aufweist; und
(b-2) einen oder mehrere Sitze (21), die zum Ein- und Aussteigen der Passagiere aus dem Passagierraum entfernt werden können und die bei Beladung mit Passagieren (22) im Passagierraum am zylindrischen Gehäuse befestigt werden können.

7. Verfahren zum Betreiben eines Röhrentransportsystems gemäß einem der vorstehenden Ansprüche, wobei das Fahrzeug ferner umfasst

(b-3) eine oder mehrere Öffnungen im ringförmigen Raum (16), um Gaspartikel entlang des Fahrzeugs zu extrahieren und in einem Tank im Servicefach des Gehäuses (23) zu speichern; und/oder
(b-4) die Innenfläche des Fahrgastraums (24) ist mit einer dünnen lumineszierenden Schicht ausgestattet, die eine Änderung der Farbe und Helligkeit oder die Darstellung einer virtuellen Realität ermöglicht, ggf. durch Einsatz von Hologrammtechnologie, die den Fahrgästen einen dreidimensionalen Eindruck vermittelt; und/oder

(b-5) die Installation eines Soundsystems; und/oder

(b-6) die Betätigung der Passagiersitze (21) zur Steigerung des Komforts und des Fahrerlebnisses; und/oder

(b-7) die Ausstattung des Fahrzeugs mit Einrichtungen, um das Gehäuse von innen zu öffnen und den Fahrgastraum (18) im Notfall aus dem Gehäuse zu lösen; und/oder

(b-8) das Fahrzeug ist mit einem Bremssystem ausgestattet, das ein Gaskissen verwendet, das durch Ausstoßen gespeicherter Gaspartikel erzeugt wird; und/oder

(b-9) das Fahrzeug ist mit elektrischen Geräten für den Antrieb und die Steuerung ausgestattet (27); und/oder

(b-10) das Fahrzeug ist mit elektrischen Geräten ausgestattet, um elektrische Energie durch Schleifkontakt oder drahtlos (28) von außen nach innen zu übertragen und elektrische Energie zu speichern

8. Verfahren zum Betreiben eines Röhrentransportsystems gemäß einem der vorstehenden Ansprüche, wobei

- der in der Innenröhre (26) installierte Teil des elektromagnetischen Führungs- und Antriebssystems der Innenröhre zusätzliche Stabilität verleiht; und/oder
- der Teil des elektromagnetischen Führungs- und Antriebssystems, der am Fahrzeug (27) installiert ist, der Fahrzeugkarosserie zusätzliche Stabilität verleiht; und/oder
- der in der Innenröhre (26) installierte Teil des elektromagnetischen Führungs- und Antriebssystems symmetrisch entlang der Röhre installiert ist, um das Fahrzeug in der Mitte der Röhre zu halten; und/oder
- der Teil des elektromagnetischen Führungs- und Antriebssystems, der am Fahrzeug (25) installiert ist, symmetrisch entlang des Fahrzeugs installiert ist, um das Fahrzeug in der Mitte des Rohrs zu halten.

9. Verfahren zum Betreiben eines Röhrentransportsystems gemäß einem der vorstehenden Ansprüche, wobei Fahrzeuge paarweise oder zu dritt betrieben werden, so dass vor oder hinter jedem Passagierfahrzeug (6) ein Sicherheitsfahrzeug (29) in einem vorbestimmten Abstand (30) betrieben wird, wobei das Verfahren umfasst:

(a) die Sicherheitsfahrzeuge (29) sind mit Sensoren und Kommunikationsgeräten ausgestattet, um ungewöhnliche Betriebszustände zu erkennen und zu melden; und/oder

(b) das Sicherheitsfahrzeug Gaspartikel mitführt, um im Notfall das Abbremsen eines der Fahrzeuge zu unterstützen; und/oder

(c) die Sicherheitsfahrzeuge mit Drucksperren ausgestattet sind, um das Personenfahrzeug vom restlichen Rohrsystem zu trennen; und/oder

(d) die Sicherheitsfahrzeuge befördern das Gepäck der Passagiere

10. Verfahren zum Betreiben eines Röhrentransportsystems gemäß einem der folgenden Punkte vorhergehende Ansprüche, wobei das Verfahren umfasst:

(i) mehrere Fahrzeuge (6, 29) so betrieben werden, dass Drosselung (choking) in dem ringförmigen Spalt (11) zwischen der äußeren Fahrzeugkarosserie (17) und der Innenfläche des Innenrohrs (12) erreicht wird; und/oder

(ii) Vorrichtungen an den Fahrzeugen (16, 32), die dazu verwendet werden können, Gaspartikel aus dem ringförmigen Raum (11) zu extrahieren und sie im Inneren der Fahrzeugkarosserie (23) zu speichern; und/oder

(iii) an den Rohren (9, 15) befestigte Vorrichtungen, die die komprimierte Luft aus dem Bereich vor einem Fahrzeug extrahieren können.

11. Verfahren zum Betreiben des Röhrentransportsystems gemäß einem der vorstehenden Ansprüchen, wobei das Verfahren umfasst:

(i) eine Oberfläche, die empfindlich auf Sonnenstrahlung reagiert und Energie an der Außenseite des Außenrohrs erzeugt; und/oder

(ii) Mittel zum Sammeln und Speichern der erzeugten Sonnenenergie; und/oder

(iii) Mittel zum Verringern des $CO_2$-Gehalts der die Rohre umgebenden Luft.

12. Verfahren zum Betreiben des Röhrentransportsystems gemäß einem der vorstehenden Ansprüche, wobei das Fahrzeug ein Bremssystem umfasst, das mechanische, magneto-elektrische oder aerodynamische Mittel verwendet, um das Fahrzeug zu verlangsamen, insbesondere durch Erzeugen einer Strömung um das Fahrzeug (32) herum mit ausgestoßenen Gaspartikeln, die zuvor im Betriebsraum (19) gespeichert waren; und/oder wobei das Fahrzeug elektrische Ausrüstung für Antrieb, Führung und Bremsen (27) mit sich führt.

13. Ein Röhrentransportsystem mit einem Hochgeschwindigkeitsfahrzeug (6) für ein geschlossenes System, das im Vakuum arbeitet, wobei das Röhrentransportsystem Folgendes aufweist

(a) eine Röhrenbaugruppe (101) bestehend aus

(a-1) einer äußeren Röhre (1)

(a-2) ein oder mehrere innere Röhren (2), die sich in einer äußeren Röhre (1) befinden und von dieser gehalten werden und zwar so, dass sich Ringspalte zwischen den benachbarten Röhren bilden; und

(a-3) eine Stützstruktur (4), die die äußere Röhre (1);

die Röhrenbaugruppe (101) mit einer inneren Wandoberfläche (12), die einen inneren Raum (5) begrenzt, der ein Fahrzeug (6) beinhaltet und führt entlang eines Pfades, der von einem ersten Ende (7) zu einem gegenüberliegenden zweiten Ende (8) der Röhrenanordnung (101) mit Druckventilen oder Düsen (9) zum Entfernen von Gaspartikeln aus dem Innenraum (5) Die Druckventile und Düsen (9) sind am ersten Ende (7) und dem gegenüberliegenden zweiten Ende (8) der Röhrenanordnung (101);
und

(b) das Fahrzeug (6) mit einer äußeren Wandfläche (10), die einen Ringspalt (11) zwischen der äußeren Wandfläche (10) des Fahrzeuges (6) und der inneren Wandfläche (12) der Röhrenanordnung (101).

## Revendications

1. Procédé pour faire fonctionner un système de transport tubulaire sous vide, composé des éléments suivants :

(a) un ensemble de tubes comprenant

(a-1) un tube extérieur (1) ;

(a-2) un ou plusieurs tubes intérieurs (2) logés et maintenus dans le tube extérieur de manière à former des espaces annulaires (3) entre les tubes adjacents ; et

(a-3) une structure de support (4) pour maintenir le tube extérieur ; l'ensemble des tubes ayant une surface de paroi intérieure (12) qui définit un espace intérieur (5) capable de recevoir un véhicule (6) et de le guider le long d'une trajectoire s'étendant depuis une première extrémité (7) à une deuxième extrémité opposée (8) de l'ensemble de tubes (101), l'ensemble tubulaire comportant des soupapes de pression ou des buses (9) pour évacuer les particules de gaz de l'espace intérieur (5), les soupapes de pression ou buses (9) étant prévues à la première extrémité (7) et à la deuxième extrémité opposée (8) de l'ensemble tubulaire ;

(b) un véhicule comportant une surface de paroi extérieure (10) qui définit un espace annulaire (11) entre la surface de paroi extérieure du véhicule (10) et la surface de paroi intérieure (12) de l'ensemble de tubes,
le procédé comprenant

(i) déplacer le véhicule (6) le long de la trajectoire vers la première extrémité (7) à une vitesse supérieure à la limite d'étranglement (choking) du flux de particules de gaz dans l'espace annulaire (11), tandis que les particules de gaz sont expulsées de l'espace intérieur (5) de l'ensemble de tubes devant le véhicule (6), puis

(ii) d'une inversion du sens de déplacement et d'un déplacement du véhicule (6) le long d'une trajectoire vers la deuxième extrémité (8) à une vitesse supérieure à la limite d'étranglement (choking) du flux de particules de gaz (29) dans l'espace annulaire (11), tandis que les particules de gaz provenant de l'espace intérieur (5) de l'ensemble de tubes (101) sont expulsées devant le véhicule (6).

2. Procédé pour faire fonctionner un système de transport à tubes selon la revendication 1,

les étapes (i) et (ii) étant répétées jusqu'à ce que la longueur libre moyenne des particules de gaz dans l'ensemble de tubes soit supérieure à la largeur (14) de l'espace annulaire (11), c'est-à-dire lorsque le nombre de Knudsen (31) est supérieur à un,
de préférence jusqu'à ce que la pression dans le tube intérieur soit de $10^{-4}$ Pa ou moins, suivi de la propulsion et du guidage du ou des véhicules (6) dans l'ensemble de tubes, de préférence à une vitesse maximale d'au moins 80 m/s, de préférence encore à une vitesse maximale d'au moins 300 m/s, de préférence encore à une vitesse maximale d'au moins 1000 m/s.

3. Procédé pour faire fonctionner un système de transport tubulaire selon la revendication 1 ou 2, le système de transport tubulaire comprenant en outre une ou plusieurs pompes à vide (15) pour générer et maintenir un niveau de vide dans un espace annulaire (3) de l'ensemble de tubes et/ou
le véhicule étant conçu pour éliminer les particules de gaz de l'espace annulaire de l'ensemble de tubes par des ouvertures latérales (16).

4. Procédé pour faire fonctionner un système de transport tubulaire selon l'une des revendications précédentes, dans lequel un ou plusieurs espaces annulaires (3) sont en communication aérodynamique avec l'espace intérieur via des éléments de commande tels que des vannes ou des buses (9) et des pompes (15) (5) de manière à ce que le flux de fluide entre les espaces annulaires puisse être supprimé ou maintenu par les éléments de commande afin de créer une chute de pression contrôlée entre les espaces annulaires adjacents et l'espace intérieur, la pression dans les espaces annulaires se situant ainsi entre la pression ambiante et le niveau de pression dans l'espace intérieur.

5. Procédé pour faire fonctionner un système de transport tubulaire selon l'une des revendications précédentes, dans lequel

   - un ou plusieurs tubes intérieurs (2) et/ou le tube extérieur (1) sont constitués de plastique renforcé de fibres de verre (PRV), de béton renforcé de fibres de verre (BRFV), de fibre de carbone, d'aluminium, de titane, de magnésium ou de toute combinaison de ces matériaux ; et/ou
   - un ou plusieurs espaces annulaires (3) contiennent un matériau de remplissage (25) qui remplit partiellement l'espace annulaire tout en permettant un écoulement de fluide le long de l'espace annulaire (3).
   - un ou plusieurs espaces annulaires (3) sont divisées dans le sens longitudinal par des cloisons (32) qui forment des espaces séparés hydrauliquement et étanches.

6. Procédé d'exploitation d'un système de transport tubulaire selon l'une des revendications précédentes, le véhicule comprenant :

   (b-1) un boîtier cylindrique (17) qui renferme un ou plusieurs compartiments passagers (18) et un ou plusieurs compartiments de service (19) et qui comporte une ouverture amovible et verrouillable (20) pour accéder au compartiment passagers ; et
   (b-2) un ou plusieurs sièges (21) qui peuvent être retirés pour permettre aux passagers d'entrer et de sortir de l'espace passagers et qui peuvent être fixés au boîtier cylindrique lorsque l'espace passagers est occupé par des passagers (22).

7. Procédé pour faire fonctionner un système de transport tubulaire selon l'une des revendications précédentes, le véhicule comprenant en outre

   (b-3) une ou plusieurs ouvertures dans l'espace annulaire (16) pour extraire les particules de gaz le long du véhicule et les stocker dans un réservoir dans le compartiment de service du boîtier (23) ; et/ou
   (b-4) la surface intérieure de l'habitacle (24) est équipée d'une fine couche luminescente qui permet de modifier la couleur et la luminosité ou d'afficher une réalité virtuelle, le cas échéant à l'aide de la technologie holographique, qui donne aux passagers une impression tridimensionnelle ; et/ou
   (b-5) l'installation d'un système audio ; et/ou
   (b-6) l'actionnement des sièges passagers (21) pour améliorer le confort et l'expérience de conduite ; et/ou
   (b-7) l'équipement du véhicule avec des dispositifs permettant d'ouvrir le boîtier de l'intérieur et de détacher l'habitacle (18) du boîtier en cas d'urgence ; et/ou
   (b-8) le véhicule est équipé d'un système de freinage qui utilise un coussin à gaz généré par l'éjection de particules de gaz stockées ; et/ou
   (b-9) le véhicule est équipé de dispositifs électriques pour la propulsion et la commande (27) ; et/ou
   (b-10) le véhicule est équipé de dispositifs électriques pour transmettre de l'énergie électrique de l'extérieur vers l'intérieur par contact glissant ou sans fil (28) et pour stocker de l'énergie électrique

8. Procédé pour faire fonctionner un système de transport tubulaire selon l'une des revendications précédentes, dans lequel

   - la partie du système de guidage et d'entraînement électromagnétique installée dans le tube intérieur (26) confère une stabilité supplémentaire au tube intérieur ; et/ou
   - la partie du système électromagnétique de guidage et d'entraînement installée sur le véhicule (27) confère une stabilité supplémentaire à la carrosserie du véhicule ; et/ou
   - la partie du système électromagnétique de guidage et d'entraînement installée dans le tube intérieur (26) est installée symétriquement le long du tube afin de maintenir le véhicule au centre du tube ; et/ou
   - la partie du système de guidage et d'entraînement électromagnétique installée sur le véhicule (25) est installée symétriquement le long du véhicule afin de maintenir le véhicule au centre du tube.

9. Procédé pour faire fonctionner un système de transport tubulaire selon l'une des revendications précédentes, dans lequel les véhicules sont exploités par paires ou par groupes de trois, de sorte qu'un véhicule de sécurité (29) est exploité à une distance prédéterminée (30) devant ou derrière chaque véhicule de passagers (6),
le procédé comprenant :

    (a) les véhicules de sécurité (29) sont équipés de capteurs et de dispositifs de communication pour détecter et signaler des conditions de fonctionnement inhabituelles ; et/ou
    (b) le véhicule de sécurité transporte des particules de gaz afin d'aider au freinage de l'un des véhicules en cas d'urgence ; et/ou
    (c) les véhicules de sécurité sont équipés de barrières de pression afin de séparer le véhicule de transport de passagers du reste du système de tubes ; et/ou
    (d) les véhicules de sécurité transportent les bagages des passagers

10. Procédé pour faire fonctionner un système de transport tubulaire selon l'un des points suivants revendications précédentes, le procédé comprenant :

    (i) l'exploitation de plusieurs véhicules (6, 29) de manière à obtenir un étranglement (choking) dans l'espace annulaire (11) entre la carrosserie extérieure du véhicule (17) et la surface intérieure du tube intérieur (12) ; et/ou
    (ii) des dispositifs sur les véhicules (16, 32) pouvant être utilisés pour extraire les particules de gaz de l'espace annulaire (11) et les stocker à l'intérieur de la carrosserie du véhicule (23) ; et/ou
    (iii) des dispositifs fixés aux tubes (9, 15) pouvant extraire l'air comprimé de la zone située devant un véhicule.

11. Procédé pour faire fonctionner le système de transport par tubes selon l'une des revendications précédentes, le procédé comprenant :

    (i) une surface sensible au rayonnement solaire et produisant de l'énergie à l'extérieur du tube extérieur ; et/ou
    (ii) des moyens pour collecter et stocker l'énergie solaire produite ; et/ou
    (iii) des moyens pour réduire la teneur en $CO_2$ de l'air entourant les tubes.

12. Procédé pour faire fonctionner le système de transport tubulaire selon l'une des revendications précédentes, dans lequel le véhicule comprend un système de freinage qui utilise des moyens mécaniques, magnéto-électriques ou aérodynamiques pour ralentir le véhicule, en particulier en créant un écoulement autour du véhicule (32) avec des particules de gaz expulsées qui étaient auparavant stockées dans l'espace de fonctionnement (19) ; et/ou dans lequel le véhicule transporte avec lui un équipement électrique pour la propulsion, le guidage et le freinage (27).

13. Système de transport tubulaire comprenant un véhicule à grande vitesse (6) pour un système fermé fonctionnant sous vide, le système de transport tubulaire comprenant

    (a) un ensemble de tubes (101) comprenant

        (a-1) un tube extérieur (1)
        (a-2) un ou plusieurs tubes intérieurs (2) situés dans un tube extérieur (1) et maintenus par celui-ci de manière à former des espaces annulaires entre les tubes adjacents ; et
        (a-3) une structure de support (4) qui soutient le tube extérieur (1) ; l'ensemble de tubes (101) avec une surface de paroi interne (12) qui délimite un espace interne (5) qui contient et guide un véhicule (6) le long d'un trajet allant d'une première extrémité (7) à une deuxième extrémité opposée (8) de l'ensemble tubulaire (101)

            avec des soupapes de pression ou des buses (9) pour éliminer les particules de gaz de l'espace intérieur (5)
            Les soupapes de pression et les buses (9) sont situées à la première extrémité (7) et à la deuxième extrémité opposée (8) de l'ensemble tubulaire (101) ; et

    (b) le véhicule (6) comportant une surface de paroi extérieure (10) qui définit un espace annulaire (11) entre la surface de paroi extérieure (10) du véhicule (6) et la surface de paroi intérieure (12) de l'ensemble de tubes (101).

Fig. 1

Fig. 2 a)

Fig. 2 b)

Fig. 3

Fig. 4

Fig. 5

a)

Step 1

b)

Step 2

c)

loading payload into vehicle a), b), c)

unloading payload from vehicle c), b), a)

17

24

23

21 22

20

23

6

18

19

Fig. 6)

29f 30 6 30 29t

Fig. 7 29

D C 14 11 B A

Fig. 8 32

Fig. 9

13

mean free path between fluid particles

L

Kn = L / D

L :: mean free path
D :: characteristic length

Fig. 10

a)

**D**

31

Kn < 0.01
viscous flow
low vacuum

b)

0.01 < Kn < 1
Knudsen flow
medium vacuum

c)

Kn > 1
Molecular flow
high vacuum

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10286927 B
- US 10286928 B
- US 1020942 A
- US 9511959 B
- US 5950543 A
- US 10538254 B2
- CN 105253150 A
- US 8468949 B2
- JP 2005119630 A
- US 10000892 B2

**Non-patent literature cited in the description**

- **RUDOLF**. thesis 1806. EPFL, 1998